# EUROPÄISCHE PATENTSCHRIFT

(11) **EP 3 999 270 B1**
(45) Veröffentlichungstag und Bekanntmachung des Hinweises auf die Patenterteilung: **22.03.2023**
(21) Anmeldenummer: 20737117.0
(22) Anmeldetag: 02.07.2020
(51) Int. Cl.: B23F 1/02, B23F 23/12, B23F 21/02

(54) **VERFAHREN ZUM SCHLEIFEN EINES ZAHNRADS MITTELS EINER SCHLEIFSCHNECKE UND EINE ABRICHTROLLE ZUM ABRICHTEN DER SCHLEIFSCHNECKE**
METHOD FOR GRINDING A GEAR WHEEL BY MEANS OF A WORM GRINDING WHEEL, AND A DRESSING ROLL FOR DRESSING THE WORM GRINDING WHEEL
PROCÉDÉ DE MEULAGE D'UNE ROUE DENTÉE AU MOYEN D'UNE VIS DE MEULAGE ET MOLETTE DE DRESSAGE PERMETTANT DE DRESSER LA VIS DE MEULAGE

(30) Priorität: 17.07.2019 DE 102019119441
(43) Veröffentlichungstag der Anmeldung: 25.05.2022
(73) Patentinhaber: Kapp Niles GmbH & Co. KG, 96450 Coburg (DE)
(72) Erfinder: GRINKO, Sergiy, 96450 Coburg (DE)
(74) Vertreter: Gosdin, Carstensen & Partner Patentanwälte Partnerschaftgesellschaft mbB
(86) Internationale Anmeldenummer: PCT/EP2020/068633
(87) Internationale Veröffentlichungsnummer: WO 2021/008882

(56) Entgegenhaltungen:
- EP-A1- 0 278 512
- EP-A2- 2 848 348
- DE-A1-102014 009 868
- GB-A- 669 122

## Beschreibung

Die Erfindung betrifft ein Verfahren zum Schleifen eines Zahnrads mittels einer Schleifschnecke in einer Schleifmaschine, bei dem mit den abrasiven Flanken der Profilierung der Schleifschnecke die Zahnflanken des Zahnrads geschliffen werden, wobei das Zahnrad eine Drehachse aufweist, wobei die Schleifschnecke eine Drehachse aufweist und wobei die zu schleifende Verzahnung des Zahnrads einen Grundkreisdurchmesser, einen Fußkreis-Durchmesser und einen Kopfkreis-Durchmesser aufweist.

Bei der Massen- oder Großserienfertigung von Verzahnungen und namentlich bei deren Hartfeinbearbeitung werden häufig abrichtbare Wälzschnecken als Schleifwerkzeug eingesetzt. Die Schleifschnecke wird zumeist mittels einer Diamantrolle abgerichtet, um das zu schleifende Verzahnungsprofil in der Schleifschnecke abzubilden. Ferner ist der Einsatz der Diamantrolle erforderlich, um nach dem Schleifen einer Anzahl von Werkstücken das verschlissene Profil neu zu generieren. Dabei wird üblicherweise der Eingriffswinkel der Abrichtrolle dem Eingriffswinkel der zu bearbeitenden Verzahnung gleichgestellt. Darüber hinaus wird zumeist geprüft, ob der Fußnutzkreis bzw. Fußformkreis der Verzahnung durch die entsprechend abgerichtet Schleifschnecke zuverlässig erreicht wird. Falls dies nicht der Fall ist, wird der Eingriffswinkel der Abrichtrolle entsprechend modifiziert. Darüber hinaus hat der Eingriffswinkel der Schleifschnecke einen Einfluss auf die sogenannte Profilausbildungszone (d. h. auf die Mindestbreite der Schleifschnecke, die zur Ausbildung des vollen Verzahnungsprofils benötigt wird). Durch die Größe der Profilausbildungszone wird die Produktivität des gesamten Bearbeitungsprozesses wesentlich beeinflusst.

Ein gattungsgemäßes Verfahren ist in der EP 0 278 512 A1 beschrieben. Die DE 10 2014 009 868 A1, die EP 2 848 348 A2 und die GB 669 122 A beschreiben weitere ähnliche Lösungen.

Der Erfindung liegt die **Aufgabe** zugrunde, ein Verfahren der eingangs genannten Art so fortzubilden, dass es möglich wird, das Schleifen mit einer möglichst geringen Profilausbildungszone vorzunehmen, wozu die Geometrie des Eingriffs zwischen der zu schleifenden Verzahnung und der Schleifschnecke gezielt verändert wird. Dadurch soll es möglich werden, die Produktivität der Schleifbearbeitung durch die Erhöhung der Anzahl der zu schleifenden Teile zwischen zwei Abricht-Vorgängen zu erhöhen.

Die **Lösung** dieser Aufgabe durch die Erfindung sieht vor, dass das Verfahren die Schritte aufweist:
a) Berechnung der Eingriffsverhältnisse zwischen den abrasiven Flanken der Profilierung der Schleifschnecke und den Zahnflanken des Zahnrads, wenn sich Zahnrad und Schleifschnecke zwecks Schleifens im Eingriff befinden, wobei ein Schnitt entlang einer Ebene betrachtet wird, die die Drehachse der Schleifschnecke beinhaltet und die senkrecht auf der Drehachse des Zahnrads steht; wobei die Berechnung umfasst:
a1) Bestimmung einer ersten Eingriffslinie, die sich aus den Kontaktpunkten zwischen zwei aufeinanderfolgenden abrasiven Flanken und zwei aufeinanderfolgenden Zahnflanken ergibt;
a2) Bestimmung einer zweiten Eingriffslinie, die sich aus den Kontaktpunkten zwischen zwei den abrasiven Flanken gegenüberliegenden aufeinanderfolgenden abrasiven Flanken und zwei den Zahnflanken gegenüberliegenden aufeinanderfolgenden Zahnflanken ergibt;
a3) Bestimmung des Schnittpunkts der ersten und der zweiten Eingriffslinie;
a4) Bestimmung einer Geraden, die durch den Schnittpunkt verläuft und den Grundkreisdurchmesser der Verzahnung des Zahnrads tangiert;
a5) Bestimmung des Schnittpunkts der Geraden mit dem Fußkreis-Durchmesser und Bestimmung des Schnittpunkts der Geraden mit dem Kopfkreis-Durchmesser;
a6) Bestimmung der Geraden, die sich als Schnittlinie der Ebene mit einer zweiten Ebene ergibt, die die Drehachse des Zahnrads enthält, die senkrecht auf der Ebene steht und die den Schnittpunkt der ersten und der zweiten Eingriffslinie enthält;
a7) Bestimmung des Abstands zwischen dem Schnittpunkt der Geraden mit dem Fußkreis-Durchmesser und der Geraden der Schnittline der Ebenen;
a8) Bestimmung des Abstands zwischen dem Schnittpunkt der Geraden mit dem Kopfkreis-Durchmesser und der Geraden der Schnittline der Ebenen;
b) Bestimmung einer gegenüber der gemäß Schritt a) ermittelten geänderten Geometrie der Eingriffsverhältnisse durch Veränderung der Lage der Geraden, die den Grundkreisdurchmesser der Verzahnung des Zahnrads tangiert so, dass die Abstände gleich sind;
c) Profilieren der Schleifschnecke mit der Geometrie der Eingriffsverhältnisse, die sich ergibt, wenn die Abstände gleich sind;
d) Schleifen des Zahnrads mit der gemäß Schritt c) profilierten Schleifschnecke.

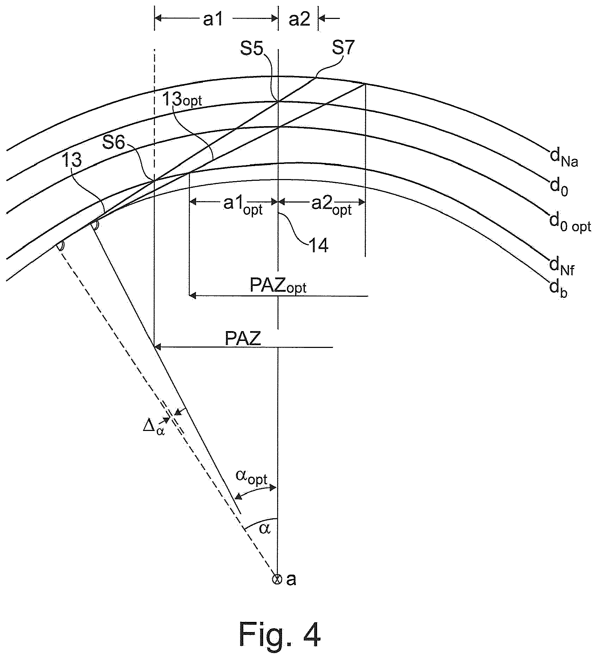

Dabei erfolgt der genannte Rechengang bevorzugt analytisch aufgrund der geometrischen Beziehungen der Verzahnung (s. hierzu die Beschreibung des Ausführungsbeispiels insbesondere gemäß Figur 4).

Der Fußkreis-Durchmesser ist vorzugsweise der Fuß-Nutzkreis-Durchmesser und der Kopfkreis-Durchmesser vorzugsweise der Kopf-Nutzkreis-Durchmesser.

Es ist aber auch möglich, dass der Fußkreis-Durchmesser der Fuß-Formkreis-Durchmesser und der Kopfkreis-Durchmesser der Kopf-Formkreis-Durchmesser ist.

Eine spezielle Ausführungsform der Erfindung sieht vor, dass nach der Durchführung von obigem Schritt b) und vor der Durchführung von obigem Schritt c) Modifikationen für die Profilierung der Schleifschnecke vorgenommen werden. Der Hintergrund dieser Maßnahme besteht darin, dass es Verzahnungsfälle gibt, bei denen die erläuterte Optimierung nicht möglich ist, da entweder der Fußform- bzw. Fußnutzkreis infolge einer ungünstigen Verzahnungsgeometrie von der Schleifschnecke nicht erreicht wird oder der Fußrundungsradius in der Verzahnung nicht vollständig ausgebildet werden kann. Hier kommt der genannte Schritt der Modifikation vorteilhaft zum Einsatz, wonach der zunächst berechnete optimale Eingriffswinkel an der Schleifschnecke vor dem Profilieren der Schleifschnecke iterativ oder analytisch zurückgerechnet wird, bis die genannten Beschränkungen nicht mehr vorliegen. Der so bestimmte neue Eingriffswinkel an der Schleifschnecke ist dann zwar nicht mehr optimal im Sinne des erläuterten Abgleichs der Eingriffslinien, aber dennoch günstiger als bei nominalem Eingriffswinkel (von dem die Ursprungsberechnung ausging). Hierdurch wird in jedem Falle eine höhere Produktivität erreicht.

Das Profilieren der Schleifschnecke gemäß obigem Schritt c) kann dabei erfolgen, indem ein Schnecken-Stahlgrundkörper gefertigt und mit einer Schicht Abrasivmaterial belegt wird.

Alternativ und bevorzugt ist jedoch vorgesehen, dass das Profilieren der Schleifschnecke gemäß obigem Schritt c) erfolgt, indem eine abrichtbare Schleifschnecke mit der Geometrie versehen wird. Dabei kann gemäß einer Möglichkeit für das Profilieren der Schleifschnecke eine mit der Geometrie korrespondierende Abrichtrolle hergestellt werden, mit der die Schleifschnecke abgerichtet wird; alternativ ist es aber auch möglich, dass das Profilieren der Schleifschnecke mit einem numerisch gesteuerten Abrichtgerät erfolgt, welches die Geometrie der abrasiven Flanken der Schleifschnecke herstellt.

Beschrieben wird auch eine Abrichtrolle zum Abrichten einer Schleifschnecke, die nach obigem Verfahren hergestellt ist.

Demgemäß sieht die Erfindung vor, dass die Eingriffsverhältnisse zwischen dem zu schleifenden Werkstück, d. h. der Verzahnung, und der Schleifschnecke gezielt modifiziert werden. Diese Anpassung erfolgt durch eine Analyse der Verzahnungsgeometrie bei Eingriff, d. h. beim Kontakt, zwischen dem Schleifwerkzeug und der Verzahnung. Dieser Kontakt erfolgt generell über die Eingriffslinien, die in normaler Richtung zur evolventischen Verzahnungsflanke und zur Schneckenoberfläche (abrasive Flanken der Profilierung der Schleifschnecke) verlaufen. Die Eingriffslinien der linken und der rechten Flanke kreuzen sich am Teilkreisdurchmesser und bilden somit Kopf- und Fußeingriffsstrecken, die von der (vorgegebenen) Profilverschiebung der Verzahnung stark abhängig sind. Eine Projektion der Eingriffstrecken bildet die Profilausbildungszone (s. Fig. 4), die für die Ausbildung des gesamten Verzahnungsprofils verantwortlich ist.

Da der Profilverschiebungsfaktor üblicherweise ungleich Null ist, unterscheiden sich die Kopf- und Fußanteile der Eingriffsstrecken voneinander. Die Profilausbildungszone wird immer durch die größeren Anteile definiert. In einem erfindungsgemäß angestrebten optimalen Fall, bei dem die Anteile gleich groß sind, nimmt die Profilausbildungszone den kleinstmöglichen Wert an. Dieser optimale Fall wird erfindungsgemäß erreicht, wenn der Eingriffswinkel der Schleifschnecke gezielt so definiert wird, dass die Eingriffsstrecken der linken und der rechten Flanke zueinander "geschoben" werden und die Kopf- und Fußanteile somit abgeglichen werden.

Vorgesehen ist demgemäß, dass zunächst die Eingriffsverhältnisse zwischen den abrasiven Flanken der Profilierung der Schleifschnecke und den Zahnflanken des Zahnrads berechnet werden, wobei die Größe der zunächst vorliegenden Profilausbildungszone bestimmt wird.

Dann wird eine geänderte Geometrie bestimmt, bei der die oben genannten Abstände (a1 und a2) gleich groß werden. Diese Geometrie wird dann dem Fertigungsprozess zu Grunde gelegt.

Die Bestimmung der geänderten Geometrie kann (ausgehend von obigem Schritt a) analytisch erfolgen, indem die entsprechenden geometrischen Beziehungen betrachtet und hieraus die Situation ermittelt wird (siehe hierzu die unten näher beschriebene Figur 4), bei der die genannte Forderung gleicher Abstände (a1 = a2) gegeben ist.

Möglich ist aber auch eine numerische (iterative) Bestimmung der Geometrie mit der genannten Forderung gleicher Abstände: Dann erfolgt eine erneute Berechnung der Eingriffsverhältnisse, wobei die Geometrie verändert wird und die Größe der Profilausbildungszone erneut bestimmt wird. Dieser Rechenschritt wird dann mit inkrementell geänderter Geometrie wiederholt, bis die Profilausbildungszone minimal ist. Das Profilieren der Schleifschnecke erfolgt dann mit der Geometrie, die sich so ergeben hat (d. h. bei minimaler Profilausbildungszone). Entsprechend erfolgt das Schleifen des Zahnrads mit der so profilierten Schleifschnecke.

Mit einer so definierten Profilausbildungszone kann die höchste Produktivität des Bearbeitungsprozesses erreicht werden.

Durch die vorgeschlagene Vorgehensweise ergibt sich somit eine Optimierung bzw. Reduzierung der Berührlinie zwischen Werkstück und Werkzeug.

Durch den Einsatz der Schleifschnecke beim Schleifen der Verzahnung wird somit das Wälzschleifverfahren eingesetzt.

Das vorgeschlagene Verfahren erlaubt also durch eine gezielte Änderung der Erzeugungsgeometrie der Schleifschnecke eine bessere Werkzeugausnutzung und insbesondere eine minimierte Profilausbildungszone.

In den Zeichnungen ist ein Ausführungsbeispiel der Erfindung dargestellt. Es zeigen:
- Fig. 1: in perspektivischer Darstellung ein Zahnrad, das mit einer Schleifschnecke hartfeinbearbeitet wird,
- Fig. 2: schematisch die Eingriffsverhältnisse zwischen der Verzahnung des Zahnrades und der Schleifschnecke gemäß dem Stand der Technik,
- Fig. 3: schematisch die Eingriffsverhältnisse zwischen der Verzahnung des Zahnrades und der Schleifschnecke bei einer erfindungsgemäßen Ausgestaltung und
- Fig. 4: schematisch die geometrischen Verhältnisse des Eingriffs zwischen Verzahnung und Schleifschnecke, wobei die Veränderung vom Stand der Technik zu erfindungsgemäßen Lösung illustriert ist.

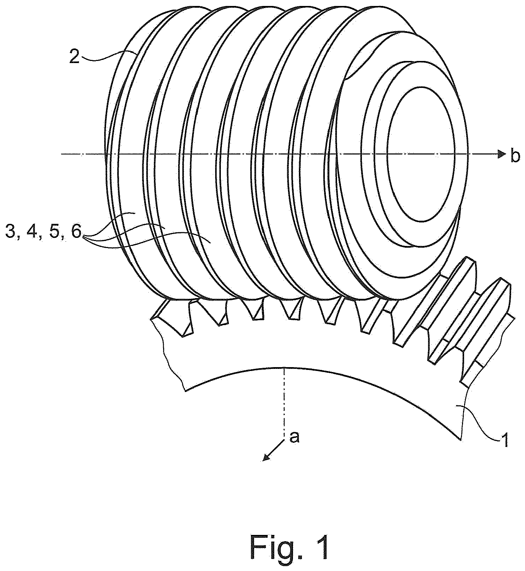

In Fig. 1 ist zunächst die grundsätzliche Vorgehensweise beim Schleifen der Verzahnung eines Zahnrad 1 mit einer Schleifschnecke 2 illustriert. Das Zahnrad 1 rotiert dabei um die Drehachse a, gleichzeitig rotiert die Schleifschnecke 2 bei gegebenem Eingriff zwischen Zahnrad 1 und Schleifschnecke 2 um die Drehachse b. Die abrasiven Flanken 3, 4, 5, 6 der Schleifschnecke 2 tragen dabei ein Aufmaß ab, welches sich auf den Zahnflanken der Verzahnung des Zahnrades 1 befindet.

Die Profilierung der abrasiven Flanken 3, 4, 5, 6 der Schleifschnecke 2 erfolgt dabei gemäß der nachfolgend beschriebene Methode.

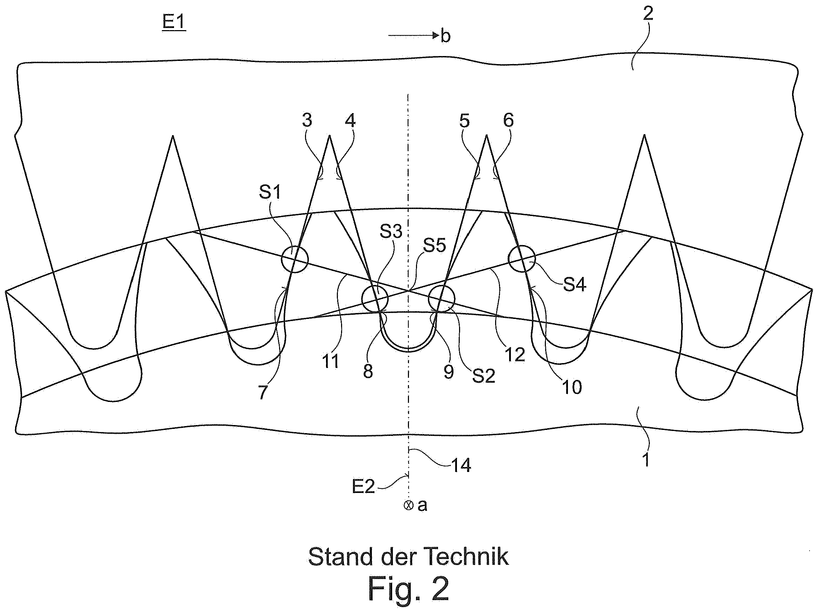

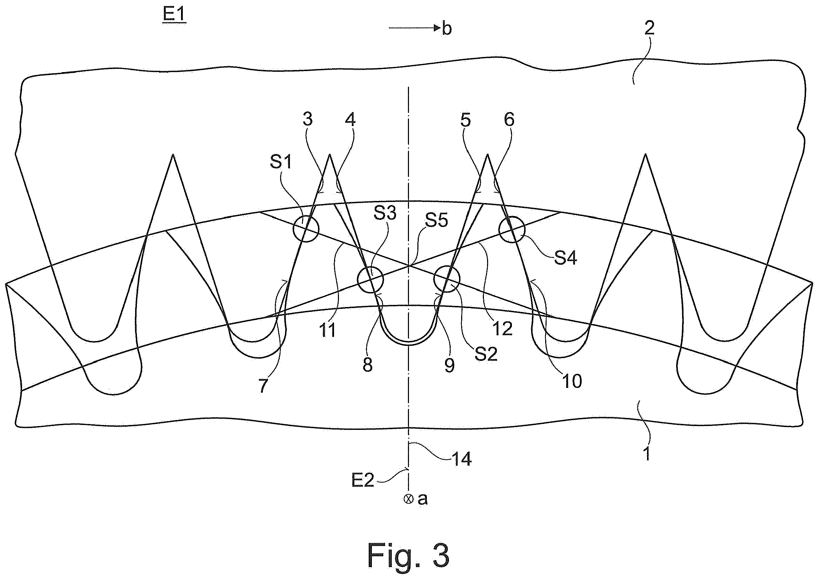

Hierzu ist zunächst in Figur 2 die übliche Vorgehensweise nach dem Stand der Technik dargestellt:
Das Zahnrad 1 steht mit der Schleifschnecke 2 und namentlich die zu schleifenden Zahnflanken 7, 8, 9, 10 des Zahnrad 1 mit den abrasiven Flanken 3, 4, 5, 6 der Schleifschnecke 2 in Eingriff. Dargestellt ist in Figur 2 (sowie in Figur 3) ein Schnitt, der sich entlang einer Ebene E1 ergibt, die die Drehachse b der Schleifschnecke 2 enthält und die senkrecht auf der Drehachse a des Zahnrad 1 steht. Senkrecht auf der Zeichenebene in den Figuren 2 und 3 steht eine zweite Ebene E2, die die Drehachse a des Zahnrad 1 enthält und die senkrecht auf der Ebene E1 steht.

Es ergeben sich im Eingriff für zwei aufeinanderfolgende Zahnflanken 7 und 9 des Zahnrads 1 Kontaktpunkte S1 und S2 mit den abrasiven Flanken 3 und 5 der Schleifschnecke 2. Entsprechend ergeben sich an den Gegenflanken Kontaktpunkte S3 und S4, nämlich zwischen den Zahnflanken 8 und 10 mit den abrasiven Flanken 4 und 6.

Durch die Kontaktpunkte S1 und S2 lässt sich eine erste Eingriffslinie 11 definieren, gleichermaßen ergibt sich durch die Kontaktpunkte S3 und S4 eine zweite Eingriffslinie 12. Deren Schnittpunkt S5 liefert den Teilkreis-Durchmesser d₀ der Verzahnung des Zahnrads 1 (s. hierzu Fig. 4). Durch diesen Schnittpunkt S5 kann eine Gerade 14 gelegt werden, die sich aus der Schnittlinie der beiden Ebenen E1 und E2 ergibt.

Nach dem Stand der Technik wird für die sich ergebende Eingriffssituation gemäß Figur 2 die Profilierung der Schleifschnecke 2 vorgenommen. Es wird also beispielsweise eine Diamant-Abrichtrolle gefertigt, die der Geometrie des zu schleifenden Zahnrad 1 entspricht und die im Eingriff mit der Schleifschnecke 2 dann das Profil der abrasiven Flanken 3, 4, 5, 6 herstellt.

Unter Bezugnahme auf Figur 4 ergibt sich, dass an den Grundkreisdurchmesser d_{b} der Verzahnung des Zahnrads 1 eine Tangente gelegt werden kann, die durch den Schnittpunkt S5 verläuft; diese Gerade ist mit 13 bezeichnet.

Die Gerade 13 schneidet den Fuß-Nutzkreis-Durchmesser d_{Nf} der Verzahnung des Zahnrads 1 in einem Schnittpunkt S6; gleichermaßen schneidet die Gerade 13 den Kopf-Nutzkreis-Durchmesser d_{Na} der Verzahnung des Zahnrads 1 in einem Schnittpunkt S7.

Durch die so bestimmten Schnittpunkte S6 und S7 lassen sich Abstände a1 und a2 bestimmen, die sich gemessen von der Geraden 14 ergeben.

Wie aus Figur 4 gesehen werden kann und wie es sich auch in Figur 2 widerspiegelt, sind die Kopfeingriffsstrecke (Bereich der Geraden 13 zwischen dem Schnittpunkt S5 und dem Schnittpunkt S7) und die Fußeingriffsstrecke (Bereich der Geraden 13 zwischen dem Schnittpunkt S5 und dem Schnittpunkt S6) unterschiedlich groß. Figur 2 zeigt also die übliche Bearbeitungssituation ohne Änderung der Eingriffsverhältnisse an der Schleifschnecke; die Fuß- und Kopfanteile des Eingriffs zwischen Werkstück und Werkzeug unterscheiden sich deutlich voneinander.

Die Profilausbildungszone PAZ ergibt sich zu dem Doppelten der größeren der beiden Abstände a1 und a2, im Falle der Situation gemäß Figur 4 also aus dem Doppelten des Abstands a1.

In Figur 4 ist das erfindungsgemäße Vorgehen illustriert, um von der erläuterten Eingriffssituation zwischen Zahnrad 1 und Schleifschnecke 2 zu einer verbesserten Situation zu gelangen (hierbei ist das numerische iterative Vorgehen beschrieben (unter Einsatz der Winkeldifferenz Δα), bei dem die Berechnung jeweils mit geänderter Lage der Geraden 13 durchgeführt wird; dies stellt eine Alternative zu einer direkten Ermittlung der gewünschten Endgeometrie dar):
Wie gesehen werden kann, verläuft die Senkrechte zur Geraden 13 (Gerade durch den Schnittpunkt S5 und tangential an den Grundkreisdurchmesser d_{b}) durch die Drehachse a des Zahnrad 1. Die Senkrechte schließt dabei mit der Geraden 14 einen Winkel α ein.

Nachdem die Situation gemäß Figur 2 berechnet wurde, wird nun nach und nach die Berechnung wiederholt, wobei der Winkel α verändert wird; er wird nämlich um eine vorgegebene Winkeldifferenz Δα verändert und für die sich so ergebende neue Situation bestimmt, wie sich das Größenverhältnis der Abstände a1 und a2 ändert.

Die Rechnung wird so lange fortgeführt, bis der Zustand erreicht wird, der in Figur 1 eingezeichnet ist und bei dem die beiden Abstände a1 und a2 gleich groß sind: a1ₒₚₜ = a2ₒₚₜ. Für diese Situation sind die Fuß- und Kopfanteile des Eingriffs gleich groß. Diese Situation korrespondiert mit Figur 3, wo die sich nunmehr ergebenden Verhältnisse skizziert sind.

Für den optimalen Fall, bei dem die beiden Abstände a1 und a2 gleich groß sind, ergibt sich nunmehr eine minimale und damit optimale Profilausbildungszone PAZₒₚₜ, wie sie in Figur 4 eingezeichnet ist; diese beträgt das Doppelte der jetzt gleichen Abstände a1ₒₚₜ bzw. a2ₒₚₜ.

Da die Profilausbildungszone PAZₒₚₜ nunmehr minimiert ist, wird nur ein kleinerer axialer Abschnitt der Schleifschnecke für die Bearbeitung des Werkstücks benötigt. Dies bedeutet, dass bei einer vorliegenden axialen Schneckenlänge mehr Werkstücke zwischen zwei Abrichtvorgängen bearbeitet werden können. Die Produktivität des Verfahrens ist entsprechend erhöht.

Bei der oben beschriebenen Berechnung (s. hierzu Fig. 4) wurden der Fuß-Nutzkreis-Durchmesser d_{Nf} und der Kopf-Nutzkreis-Durchmesser d_{Na} zugrunde gelegt. Genauso ist es allerdings auch möglich, dass der Fuß-Formkreis-Durchmesser d_{Ff} und der Kopf-Formkreis-Durchmesser d_{Fa} der Berechnung zugrunde gelegt wird. Diese Durchmesser liegen ein Stück tiefer bzw. höher als die beiden Nutzkreise. Je nachdem, welcher Durchmesser als Dateneingabe zur Verfügung steht, können diese bei der Berechnung verwendet werden.

Angemerkt sei, dass bei den oben beschriebenen Verfahrensschritten a1) und a2) die Eingriffslinien ermittelt werden, wie sie sich durch die Kontaktpunkte zwischen Zahnrad und Werkzeug bei zwei aufeinanderfolgenden Zahnflanken ergeben. Allerdings variiert die Anzahl der gleichzeitig vorliegenden Kontaktpunkte zwischen Werkzeug und Zahnflanken in Abhängigkeit der Verzahnungsparameter.

Die gemäß den Verfahrensschritten a1) und a2) bestimmten Eingriffslinien entsprechen letztlich der Geraden 13, da diese den Grundkreis der Verzahnung tangiert (was letztlich die Definition der Eingriffslinie ist). Die Gerade 13 wurde allerdings als eigenständiges Element eingeführt, da sie es ist, die im weiteren Verlauf der Berechnung variiert wird.

Wie oben bereits erwähnt, gibt es Verzahnungsfälle, bei denen die erläuterte Optimierung (d. h. letztlich die vorgenommene Änderung des Eingriffswinkels) nicht möglich ist, da entweder
1. der Fußform- bzw. Fußnutzkreis infolge einer ungünstigen Verzahnungsgeometrie von der Schleifschnecke nicht erreicht wird oder
2. der Fußrundungsradius in der Verzahnung nicht vollständig ausgebildet werden kann.

In solchen Fällen muss der berechnete optimale Eingriffswinkel (mit a1ₒₚₜ = a2ₒₚₜ) an der Schleifschnecke nach der Durchführung der beschriebenen Berechnung (gemäß Schritt a) und Schritt b) von Anspruch 1) und vor dem Profilieren der Schleifschnecke (gemäß Schritt c) von Anspruch 1) iterativ oder analytisch zurückgerechnet werden, bis die genannten Beschränkungen (1. und/oder 2.) nicht mehr vorliegen. Der so bestimmte neue Eingriffswinkel an der Schleifschnecke ist dann zwar nicht mehr optimal im Sinne des erläuterten Abgleichs der Eingriffslinien (mit a1ₒₚₜ = a2ₒₚₜ), aber dennoch günstiger als bei nominalem Eingriffswinkel (von dem die Ursprungsberechnung ausging). In jedem Falle wird auch so ein Zuwachs an Produktivität erreicht.

Folgendes sei noch bemerkt: Als "Fußkreisdurchmesser" wird gelegentlich bei Verzahnungen jener Durchmesser definiert, an dem der tiefste Punkt der Verzahnungslücke liegt. Entsprechendes gilt für den "Kopfkreisdurchmesser", der häufig den höchsten Punkt der Verzahnungslücke angibt bzw. bezeichnet. Im Falle der vorliegenden Erfindung ist unter den Begriffen des "Fußkreisdurchmesser" und "Kopfkreisdurchmesser" allerdings jener Durchmesser zu verstehen, an dem die Evolvente startet bzw. endet.

### Bezugszeichenliste:

- 1: Zahnrad (Werkstück)
- 2: Schleifschnecke (Schleifwerkzeug)
- 3: abrasive Flanke der Profilierung der Schleifschnecke
- 4: abrasive Flanke der Profilierung der Schleifschnecke
- 5: abrasive Flanke der Profilierung der Schleifschnecke
- 6: abrasive Flanke der Profilierung der Schleifschnecke
- 7: Zahnflanke des Zahnrads
- 8: Zahnflanke des Zahnrads
- 9: Zahnflanke des Zahnrads
- 10: Zahnflanke des Zahnrads
- 11: erste Eingriffslinie
- 12: zweite Eingriffslinie
- 13: Gerade durch den Schnittpunkt S5 und tangential an den Grundkreisdurchmesser
- 14: Geraden der Schnittlinie der Ebenen E1 und E2

- a: Drehachse des Zahnrads
- b: Drehachse der Schleifschnecke
- d_{b}: Grundkreisdurchmesser der Verzahnung des Zahnrads

- d_{f}: Fußkreis-Durchmesser der Verzahnung des Zahnrads
- dₐ: Kopfkreis-Durchmesser der Verzahnung des Zahnrads
- d_{Nf}: Fuß-Nutzkreis-Durchmesser der Verzahnung des Zahnrads
- d_{Na}: Kopf-Nutzkreis-Durchmesser der Verzahnung des Zahnrads
- d_{Ff}: Fuß-Formkreis-Durchmesser der Verzahnung des Zahnrads
- d_{Fa}: Kopf-Formkreis-Durchmesser der Verzahnung des Zahnrads

- d₀: Teilkreis-Durchmesser der Verzahnung des Zahnrads

- E1: Ebene (enthält Drehachse b der Schleifschnecke, senkrecht auf Drehachse a des Zahnrads)
- E2: Ebene (enthält Drehachse a des Zahnrads, senkrecht auf Ebene E1 und enthält Schnittpunkt S5)

- S1: Kontaktpunkt
- S2: Kontaktpunkt
- S3: Kontaktpunkt
- S4: Kontaktpunkt
- S5: Schnittpunkt der ersten und zweiten Eingriffslinie
- S6: Schnittpunkts der Geraden (13) mit dem Fuß-Nutzkreis-Durchmesser
- S7: Schnittpunkts der Geraden (13) mit dem Kopf-Nutzkreis-Durchmesser

- a1: Abstand zwischen dem Schnittpunkt S6 und der Geraden 14
- a2: Abstand zwischen dem Schnittpunkt S7 und der Geraden 14

- PAZ: Profilausbildungszone

- α: Winkel
- Δα: Winkeldifferenz

## Patentansprüche

1. Verfahren zum Schleifen eines Zahnrads (1) mittels einer Schleifschnecke (2) in einer Schleifmaschine, bei dem mit den abrasiven Flanken (3, 4, 5, 6) der Profilierung der Schleifschnecke (2) die Zahnflanken (7, 8, 9, 10) des Zahnrads (1) geschliffen werden, wobei das Zahnrad (1) eine Drehachse (a) aufweist, wobei die Schleifschnecke (2) eine Drehachse (b) aufweist und wobei die zu schleifende Verzahnung des Zahnrads (1) einen Grundkreisdurchmesser (d_{b}), einen Fußkreis-Durchmesser (d_{f}) und einen Kopfkreis-Durchmesser (dₐ) aufweist,
**dadurch gekennzeichnet, dass**
das Verfahren die Schritte aufweist:
a) Berechnung der Eingriffsverhältnisse zwischen den abrasiven Flanken (3, 4, 5, 6) der Profilierung der Schleifschnecke (2) und den Zahnflanken (7, 8, 9, 10) des Zahnrads (1), wenn sich Zahnrad (1) und Schleifschnecke (2) zwecks Schleifens im Eingriff befinden, wobei ein Schnitt entlang einer Ebene (E1) betrachtet wird, die die Drehachse (b) der Schleifschnecke (2) beinhaltet und die senkrecht auf der Drehachse (a) des Zahnrads (1) steht; wobei die Berechnung umfasst:
a1) Bestimmung einer ersten Eingriffslinie (11), die sich aus den Kontaktpunkten (S1, S2) zwischen zwei aufeinanderfolgenden abrasiven Flanken (3, 5) und zwei aufeinanderfolgenden Zahnflanken (7, 9) ergibt;
a2) Bestimmung einer zweiten Eingriffslinie (12), die sich aus den Kontaktpunkten (S3, S4) zwischen zwei den abrasiven Flanken (3, 5) gegenüberliegenden aufeinanderfolgenden abrasiven Flanken (4, 6) und zwei den Zahnflanken (7, 9) gegenüberliegenden aufeinanderfolgenden Zahnflanken (8, 10) ergibt;
a3) Bestimmung des Schnittpunkts (S5) der ersten und der zweiten Eingriffslinie (11, 12);
a4) Bestimmung einer Geraden (13), die durch den Schnittpunkt (S5) verläuft und den Grundkreisdurchmesser (d_{b}) der Verzahnung des Zahnrads (1) tangiert;
a5) Bestimmung des Schnittpunkts (S6) der Geraden (13) mit dem Fußkreis-Durchmesser (d_{f}) und Bestimmung des Schnittpunkts (S7) der Geraden (13) mit dem Kopfkreis-Durchmesser (dₐ);
a6) Bestimmung der Geraden (14), die sich als Schnittlinie der Ebene (E1) mit einer zweiten Ebene (E2) ergibt, die die Drehachse (a) des Zahnrads (1) enthält, die senkrecht auf der Ebene (E1) steht und die den Schnittpunkt (S5) der ersten und der zweiten Eingriffslinie (11, 12) enthält;
a7) Bestimmung des Abstands (a1) zwischen dem Schnittpunkt (S6) der Geraden (13) mit dem Fußkreis-Durchmesser (d_{f}) und der Geraden (14) der Schnittline der Ebenen (E1, E2);
a8) Bestimmung des Abstands (a2) zwischen dem Schnittpunkt (S7) der Geraden (13) mit dem Kopfkreis-Durchmesser (dₐ) und der Geraden (14) der Schnittline der Ebenen (E1, E2);
b) Bestimmung einer gegenüber der gemäß Schritt a) ermittelten geänderten Geometrie der Eingriffsverhältnisse durch Veränderung der Lage der Geraden (13), die den Grundkreisdurchmesser (d_{b}) der Verzahnung des Zahnrads (1) tangiert so, dass die Abstände (a1, a2) gleich sind (a1ₒₚₜ = a2ₒₚₜ);
c) Profilieren der Schleifschnecke (2) mit der Geometrie der Eingriffsverhältnisse, die sich ergibt, wenn die Abstände (a1, a2) gleich sind;
d) Schleifen des Zahnrads (1) mit der gemäß Schritt c) profilierten Schleifschnecke.

2. Verfahren nach Anspruch 1, **dadurch gekennzeichnet, dass** der Fußkreis-Durchmesser (d_{f}) der Fuß-Nutzkreis-Durchmesser (d_{Nf}) und der Kopfkreis-Durchmesser (dₐ) der Kopf-Nutzkreis-Durchmesser (d_{Na}) ist.

3. Verfahren nach Anspruch 1, **dadurch gekennzeichnet, dass** der Fußkreis-Durchmesser (d_{f}) der Fuß-Formkreis-Durchmesser (d_{Ff}) und der Kopfkreis-Durchmesser (dₐ) der Kopf-Formkreis-Durchmesser (d_{Fa}) ist.

4. Verfahren nach einem der Ansprüche 1 bis 3, **dadurch gekennzeichnet, dass** nach der Durchführung von Schritt b) gemäß Anspruch 1 und vor der Durchführung von Schritt c) gemäß Anspruch 1 Modifikationen für die Profilierung der Schleifschnecke (2) vorgenommen werden.

5. Verfahren nach einem der Ansprüche 1 bis 4, **dadurch gekennzeichnet, dass** das Profilieren der Schleifschnecke (2) gemäß Schritt c) von Anspruch 1 erfolgt, indem ein Schnecken-Stahlgrundkörper gefertigt und mit einer Schicht Abrasivmaterial belegt wird.

6. Verfahren nach einem der Ansprüche 1 bis 4, **dadurch gekennzeichnet, dass** das Profilieren der Schleifschnecke (2) gemäß Schritt c) von Anspruch 1 erfolgt, indem eine abrichtbare Schleifschnecke (2) mit der Geometrie versehen wird.

7. Verfahren nach Anspruch 6, **dadurch gekennzeichnet, dass** für das Profilieren der Schleifschnecke (2) eine mit der Geometrie korrespondierende Abrichtrolle hergestellt wird, mit der die Schleifschnecke (2) abgerichtet wird.

8. Verfahren nach Anspruch 6, **dadurch gekennzeichnet, dass** das Profilieren der Schleifschnecke (2) mit einem numerisch gesteuerten Abrichtgerät erfolgt, welches die Geometrie der abrasiven Flanken (3, 4, 5, 6) der Schleifschnecke (2) herstellt.

## Claims

1. Method for grinding a gear wheel (1) by means of a worm grinding worm (2) in a grinding machine, wherein the tooth flanks (7, 8, 9, 10) of the gear wheel (1) are ground with the abrasive flanks (3, 4, 5, 6) of the profiling of the grinding worm (2), wherein the gear wheel (1) has an axis of rotation (a), wherein the grinding worm (2) has an axis of rotation (b), and wherein the toothing of the gear wheel (1) to be ground has a base circle diameter (d_{b}), a root circle diameter (d_{f}) and a tip circle diameter (dₐ),
**characterized in that**
the method comprises the steps of:
a) Calculation of the engagement ratios between the abrasive flanks (3, 4, 5, 6) of the profiling of the grinding worm (2) and the tooth flanks (7, 8, 9, 10) of the gear wheel (1) when the gear wheel (1) and the grinding worm (2) are engaged for grinding, wherein a section is considered along a plane (E1) which includes the axis of rotation (b) of the grinding worm (2) and which is perpendicular to the axis of rotation (a) of the gear wheel (1); said calculation comprising:
a1) Determination of a first line of engagement (11) resulting from the contact points (S1, S2) between two successive abrasive flanks (3, 5) and two successive tooth flanks (7, 9);
a2) Determination of a second line of engagement (12) resulting from the contact points (S3, S4) between two successive abrasive flanks (4, 6) opposite the abrasive flanks (3, 5) and two successive tooth flanks (8, 10) opposite the tooth flanks (7, 9);
a3) Determination of the intersection point (S5) of the first and second lines of engagement (11, 12);
a4) Determination of a line (13) passing through the intersection point (S5) and tangent to the base circle diameter (d_{b}) of the toothing of the gear wheel (1);
a5) Determination of the intersection point (S6) of the line (13) with the root circle diameter (d_{f}) and determination of the intersection point (S7) of the line (13) with the tip circle diameter (dₐ);
a6) Determination of the line (14) that results as the intersection of the plane (E1) with a second plane (E2) that contains the axis of rotation (a) of the gear wheel (1), that is perpendicular to the plane (E1) and that contains the intersection (S5) of the first and second lines of engagement (11, 12);
a7) Determination of the distance (a1) between the intersection point (S6) of the line (13) with the root circle diameter (d_{f}) and the line (14) of the intersection line of the planes (E1, E2);
a8) Determination of the distance (a2) between the intersection point (S7) of the line (13) with the tip circle diameter (dₐ) and the line (14) of the intersection line of the planes (E1, E2);
b) Determination of a changed geometry of the engagement ratios compared to the one determined according to step a) by changing the position of the line (13) which is tangent to the base circle diameter (d_{b}) of the toothing of the gear wheel (1) in such a way that the distances (a1, a2) are equal (a1ₒₚₜ = a2ₒₚₜ);
c) Profiling of the grinding worm (2) with the geometry of the engagement ratios that results when the distances (a1, a2) are equal;
d) Grinding of the gear wheel (1) with the grinding worm profiled according to step c).

2. Method according to claim 1, **characterized in that** the root circle diameter (d_{f}) is the usable root circle diameter (d_{Nf}) and the tip circle diameter (dₐ) is the usable tip circle diameter (d_{Na}).

3. Method according to claim 1, **characterized in that** the root circle diameter (d_{f}) is the form circle root diameter (d_{Ff}) and the tip circle diameter (dₐ) is the form circle tip diameter (d_{Fa}).

4. Method according to one of claims 1 to 3, **characterized in that** modifications for profiling the grinding worm (2) are made after carrying out step b) according to claim 1 and before carrying out step c) according to claim 1.

5. Method according to one of claims 1 to 4, **characterized in that** the profiling of the grinding worm (2) is carried out according to step c) of claim 1 by manufacturing a worm steel base body and covering it with a layer of abrasive material.

6. Method according to one of claims 1 to 4, **characterized in that** the profiling of the grinding worm (2) is carried out according to step c) of claim 1 by providing a dressable grinding worm (2) with the geometry.

7. Method according to claim 6, **characterized in that** for the profiling of the grinding worm (2) a dressing roller is produced which corresponds to the geometry and with which the grinding worm (2) is dressed.

8. Method according to claim 6, **characterized in that** the profiling of the grinding worm (2) is carried out with a numerically controlled dressing device which produces the geometry of the abrasive flanks (3, 4, 5, 6) of the grinding worm (2).

## Revendications

1. Procédé de rectification d'une roue dentée (1) au moyen d'une vis de rectification (2) dans une rectifieuse, procédé dans lequel les flancs de dent (7, 8, 9, 10) de la roue dentée (1) sont rectifiés à l'aide des flancs abrasifs (3, 4, 5, 6) du profil de la vis de rectification (2), la roue dentée (1) ayant un axe de rotation (a), la vis de rectification (2) ayant un axe de rotation (b) et la denture à rectifier de la roue dentée (1) ayant un diamètre de cercle de base (d_{b}), un diamètre de cercle de pied (d_{f}) et un diamètre de cercle de tête (dₐ),
**caractérisé en ce que**
le procédé comprend les étapes suivantes :
a) le calcul des conditions d'engrènement entre les flancs abrasifs (3, 4, 5, 6) du profil de la vis de rectification (2) et les flancs de dent (7, 8, 9, 10) de la roue dentée (1) lorsque la roue dentée (1) et la vis de rectification (2) sont en engrènement en vue de la rectification, une coupe étant observée suivant un plan (E1) qui contient l'axe de rotation (b) de la vis de rectification (2) et qui est perpendiculaire à l'axe de rotation (a) de la roue dentée (1) ; le calcul comprenant :
a1) la détermination d'une première ligne d'engrènement (11) qui résulte des points de contact (S1, S2) entre deux flancs abrasifs successifs (3, 5) et deux flancs de dent successifs (7, 9) ;
a2) la détermination d'une deuxième ligne d'engrènement (12) qui résulte des points de contact (S3, S4) entre deux flancs abrasifs successifs (4, 6) opposés aux flancs abrasifs (3, 5) et deux flancs de dent successifs (8, 10) opposés aux flancs de dents (7, 9) ;
a3) la détermination du point d'intersection (S5) des première et deuxième lignes d'engrènement (11, 12) ;
a4) la détermination d'une droite (13) qui passe par le point d'intersection (S5) et qui est tangente au diamètre du cercle de base (d_{b}) de la denture de la roue dentée (1) ;
a5) la détermination du point d'intersection (S6) de la droite (13) avec le diamètre de cercle de pied (d_{f}) et la détermination du point d'intersection (S7) de la droite (13) avec le diamètre du cercle de tête (dₐ) ;
a6) la détermination de la droite (14) qui résulte de l'intersection du plan (E1) avec un deuxième plan (E2) qui contient l'axe de rotation (a) de la roue dentée (1), qui est perpendiculaire au plan (E1) et qui contient le point d'intersection (S5) des première et deuxième lignes d'engrènement (11, 12) ;
a7) la détermination de la distance (a1) entre le point d'intersection (S6) de la droite (13) avec le diamètre du cercle de pied (d_{f}) et la droite (14) de la ligne d'intersection des plans (E1, E2) ;
a8) la détermination de la distance (a2) entre le point d'intersection (S7) de la droite (13) avec le diamètre du cercle de tête (dₐ) et la droite (14) de la ligne d'intersection des plans (E1, E2) ;
b) la détermination d'une géométrie modifiée des conditions d'engrènement, déterminée par rapport à l'étape a), par modification de la position de la droite (13) qui est tangente au diamètre de cercle de base (d_{b}) de la denture de la roue dentée (1) de sorte que les distances (a1, a2) soient égales (a1ₒₚₜ = a2ₒₚₜ);
c) le profilage de la vis de rectification (2) avec la géométrie des conditions d'engrènement qui résultent lorsque les distances (a1, a2) sont égales ;
d) la rectification de la roue dentée (1) avec la vis de rectification profilée selon l'étape c).

2. Procédé selon la revendication 1, **caractérisé en ce que** le diamètre du cercle de pied (d_{f}) est le diamètre de cercle de pied utile (d_{Nf}) et le diamètre de cercle de tête (dₐ) est le diamètre de cercle de tête utile (d_{Na}).

3. Procédé selon la revendication 1, **caractérisé en ce que** le diamètre de cercle de pied (d_{f}) est le diamètre de cercle de forme de pied (drf) et le diamètre de cercle de tête (dₐ) est le diamètre du cercle de forme de tête (d_{Fa}).

4. Procédé selon l'une des revendications 1 à 3, **caractérisé en ce que**, après la réalisation de l'étape b) selon la revendication 1 et avant la réalisation de l'étape c) selon la revendication 1, des modifications sont apportées au profilé de la vis de rectification (2) .

5. Procédé selon l'une des revendications 1 à 4, **caractérisé en ce que** le profilé de la vis de rectification (2) est réalisé suivant l'étape c) de la revendication 1 par fabrication d'une vis de rectification à corps en acier recouvert d'une couche de matériau abrasif.

6. Procédé selon l'une des revendications 1 à 4, **caractérisé en ce qu'**une vis de rectification (2) pouvant être dressée est pourvue de la géométrie afin de profiler la vis de rectification (2) suivant l'étape c) de la revendication 1.

7. Procédé selon la revendication 6, **caractérisé en ce que** le profilage de la vis de rectification (2) est réalisé à l'aide d'un rouleau de dressage qui correspond à la géométrie et avec lequel la vis de rectification (2) est dressée.

8. Procédé selon la revendication 6, **caractérisé en ce que** le profilage de la vis de rectification (2) est réalisé à l'aide d'un dispositif de dressage à commande numérique qui réalise la géométrie des flancs abrasifs (3, 4, 5, 6) de la vis de rectification (2).
